(19) Europäisches Patentamt / European Patent Office / Office européen des brevets

(11) **EP 2 092 268 B1**

(12) **FASCICULE DE BREVET EUROPEEN**

(45) Date de publication et mention
de la délivrance du brevet:
**02.10.2019 Bulletin 2019/40**

(21) Numéro de dépôt: **07872372.3**

(22) Date de dépôt: **14.12.2007**

(51) Int Cl.:
***G01B 21/04*** *(2006.01)*

(86) Numéro de dépôt international:
**PCT/FR2007/002082**

(87) Numéro de publication internationale:
**WO 2008/090284 (31.07.2008 Gazette 2008/31)**

(54) **PROCEDÉ DE CORRECTION DE LA GÉOMETRIE D'UNE COURBE PALPÉE**

VERFAHREN ZUR KORREKTUR DER GEOMETRIE EINER ABGETASTETEN KURVE

METHOD FOR CORRECTING THE GEOMETRY OF A PROBED CURVE

(84) Etats contractants désignés:
**AT BE BG CH CY CZ DE DK EE ES FI FR GB GR
HU IE IS IT LI LT LU LV MC MT NL PL PT RO SE
SI SK TR**

(30) Priorité: **18.12.2006 FR 0611021**

(43) Date de publication de la demande:
**26.08.2009 Bulletin 2009/35**

(73) Titulaire: **Essilor International
94220 Charenton-le-Pont (FR)**

(72) Inventeur: **TESSERAUD, Romain
F-94220 Charenton Le Pont (FR)**

(74) Mandataire: **Jacobacci Coralis Harle
32, rue de l'Arcade
75008 Paris (FR)**

(56) Documents cités:
**EP-A- 0 599 513      EP-A1- 0 819 967
EP-A2- 0 583 915      EP-A2- 1 158 269
FR-A- 2 870 933**

**Description**

DOMAINE TECHNIQUE AUQUEL SE RAPPORTE L'INVENTION

La présente invention concerne de manière générale le domaine de la lunetterie et plus précisément l'acquisition de la géométrie du contour du drageoir d'un cercle d'une monture de lunettes cerclée.

Elle concerne un procédé d'acquisition de la géométrie d'un contour d'un drageoir d'un cercle d'une monture de lunettes, comprenant un palpage du drageoir par glissement ou roulement d'un palpeur qui est entraîné selon la direction longitudinale du drageoir et qui est rappelé transversalement vers le fond du drageoir, la déduction de la géométrie d'une courbe palpée approchant un brin longitudinal du drageoir, et la correction de cette géométrie de courbe palpée.

L'invention trouve une application particulièrement avantageuse dans la lecture des montures de lunettes très cambrées.

ARRIÈRE-PLAN TECHNOLOGIQUE

La partie technique du métier de l'opticien consiste à monter une paire de lentilles ophtalmiques sur une monture sélectionnée par un porteur. Ce montage se décompose en trois opérations principales :

- l'acquisition de la géométrie du contour du drageoir de chacun des deux cercles de la monture de lunettes choisie par le futur porteur, c'est-à-dire de la géométrie des rainures qui parcourent l'intérieur de chaque cercle de la monture,
- le centrage de chaque lentille qui consiste à déterminer la position qu'occupera chaque lentille sur la monture afin d'être convenablement centrée en regard de la pupille de l'oeil du porteur de manière à ce qu'elle exerce convenablement la fonction optique pour laquelle elle a été conçue,
- le détourage de chaque lentille qui consiste à usiner ou à découper son contour à la forme souhaitée, compte tenu de la géométrie du contour du drageoir et des paramètres de centrage définis, avec, en fin d'usinage, le biseautage qui consiste à réaliser sur la tranche de la lentille une nervure d'emboîtement destinée à maintenir la lentille dans le drageoir que comporte le cercle de la monture.

Dans le cadre de la présente invention, on s'intéresse principalement à la première opération d'acquisition de la géométrie des contours des drageoirs des cercles de la monture de lunettes choisie.

En pratique, il s'agit tout d'abord, pour l'opticien, de palper le fond des rainures de chacun des deux cercles de la monture de lunettes sélectionnée afin de déterminer précisément les coordonnées d'une pluralité de points caractérisant la géométrie d'un brin longitudinal du drageoir de chaque cercle (en pratique confondu avec l'arête de fond du drageoir). La connaissance de la géométrie de ce brin permet à l'opticien de déduire la géométrie approximative que devra présenter le contour de la lentille à usiner afin de pouvoir être insérée dans le cercle correspondant de la monture de lunettes.

Le drageoir présentant généralement une section en forme de dièdre, l'objectif de cette opération est en particulier de suivre très exactement le fond du drageoir que comporte le cercle à lire, de manière à pouvoir mémoriser une image numérique précise de la géométrie du contour du drageoir.

Dans le cas des montures fortement « galbées » et « versées », c'est-à-dire fortement cambrées et vrillées, un palpage simple du drageoir ne donne pas des résultats satisfaisants. La demanderesse a en effet remarqué que, malgré le soin apporté au palpage des drageoirs de telles montures de lunettes, il subsiste souvent des difficultés d'emboîtement des lentilles dans ces montures.

On connaît par ailleurs du document EP 0 819 967 un procédé consistant à palper la section du drageoir puis à réaliser un calcul d'emboîtement du biseau d'une lentille dans le drageoir. Selon ce procédé, la forme connue de la section de la meule de biseautage (qui correspond en négatif à la forme du biseau à usiner sur la tranche de la lentille) est rapprochée de celle palpée du drageoir, afin de simuler le montage du biseau de la lentille dans le drageoir. Ce procédé permet ainsi d'affiner le calcul de la consigne de détourage de la lentille.

OBJET DE L'INVENTION

Afin de remédier à l'inconvénient précité de l'état de la technique, la présente invention propose un procédé d'acquisition plus précis de la géométrie des contours des drageoirs des cercles de montures de lunettes.

Plus particulièrement, on propose selon l'invention un procédé selon la revendication 1 comprenant une étape de correction de la géométrie d'une courbe palpée approchant un brin longitudinal d'un drageoir d'un cercle d'une monture de lunettes, comportant :

- une recherche d'une ou plusieurs éventuelles zones d'anomalie de la courbe palpée, et
- si une ou plusieurs zones d'anomalie sont trouvées, une correction de la géométrie de chaque zone d'anomalie de la courbe palpée.

On entend par « brin longitudinal du drageoir » un brin qui appartient à l'un ou l'autre des flancs du drageoir et qui est parallèle ou confondu avec l'arête de fond du drageoir. En d'autres termes, en chaque section transversale du drageoir, chaque brin longitudinal présente une tangente parallèle à la tangente à l'arête de fond du drageoir.

La demanderesse a remarqué que, dans le cas des montures fortement cambrées, un appui simple du palpeur sur le drageoir, dans le plan moyen des cercles de la monture de lunettes, ne permet pas au palpeur de suivre précisément le fond du drageoir. En effet, lorsque le « versage » (ou vrillage) de la monture est très important et que l'un des flancs du drageoir est très incliné, il arrive que le palpeur glisse sur ce flanc en s'écartant du fond du drageoir sans que l'opticien ne puisse s'en rendre compte. Par conséquent, lors du palpage du drageoir, on acquiert non pas la géométrie exacte d'un brin longitudinal du drageoir (confondu avec l'arête de fond du drageoir), mais plutôt la géométrie d'une courbe approchant ce brin longitudinal.

L'invention se propose d'identifier ces zones et de corriger la forme de la courbe lue dans ces seules zones.

Selon un premier mode de mise en oeuvre de l'invention, lesdites éventuelles zones d'anomalie de la courbe palpée sont recherchées en tant que zones dans lesquelles la dérivée première ou seconde d'une première fonction de l'une au moins des trois coordonnées de la courbe palpée par rapport à une seconde fonction d'une autre au moins des trois coordonnées de la courbe palpée dépasse, en valeur absolue, une valeur seuil qui est relative à la monture considérée ou qui est absolue.

Afin de détecter les zones dans lesquelles le palpeur s'est écarté du fond du drageoir, on utilise judicieusement le fait que cette erreur de lecture du drageoir se traduit par une plus forte accélération ou une plus grande vitesse du palpeur que celle qui serait normalement possible si le palpeur restait au contact du fond de drageoir.

En effet, lorsque le palpeur dévie du fond du drageoir en glissant le long de l'un des flancs du drageoir, l'accélération du palpeur oscille anormalement et prend des valeurs importantes. Ainsi, une zone du drageoir peut être considérée comme zone d'anomalie dès lors que les oscillations de l'accélération du palpeur deviennent très importantes dans cette zone.

L'invention se propose alors de déterminer, grâce à la géométrie de la courbe palpée le long du drageoir, l'accélération ou la vitesse présentée par le palpeur lors du palpage du drageoir, d'en déduire la position des zones dans lesquelles le palpeur s'est écarté du fond du drageoir, et d'acquérir la géométrie d'une courbe approchant mieux le brin longitudinal du drageoir en corrigeant, dans les zones d'anomalie, la géométrie de la courbe initialement palpée.

Avantageusement, la recherche des éventuelles zones d'anomalie de la courbe palpée comporte la recherche des éventuels secteurs angulaires, repérés autour d'un axe intérieur et globalement transversal à la courbe palpée, dans lesquels la dérivée première ou seconde d'une coordonnée radiale et/ou axiale de la courbe palpée par rapport à une autre coordonnée angulaire de la courbe palpée est supérieure, en valeur absolue, à ladite valeur seuil.

Selon un deuxième mode de mise en oeuvre de l'invention, la recherche desdites éventuelles zones d'anomalie de la courbe palpée comporte les étapes suivantes :

- découpage de la courbe palpée en plusieurs portions de découpage,
- calcul d'une portion de courbe d'interpolation entre les extrémités de chaque portion de découpage de la courbe palpée,
- recherche, parmi les portions de découpage de la courbe palpée, d'éventuelles portions de découpage anormales s'écartant de la portion de courbe d'interpolation correspondante au-delà d'une valeur seuil donnée,
- détermination desdites zones d'anomalies en fonction des éventuelles portions de découpage anormales trouvées.

Ainsi, si la distance ou la surface entre la courbe d'interpolation et la courbe palpée dépasse dans une zone une valeur seuil, ce dépassement signifie que le drageoir n'a pas été correctement palpé dans cette zone. Il convient alors de déterminer plus précisément la forme de la courbe palpée dans cette zone.

Avantageusement, les portions de découpage de la courbe palpée se superposent partiellement.

La valeur seuil peut être déterminée de plusieurs manières.

Elle peut être prédéterminée et commune à plusieurs montures de lunettes.

A partir d'un échantillonnage de montures de lunettes représentatif de l'ensemble des montures de lunettes qui existent, on calcule une valeur seuil moyenne qui convient à un ensemble de montures, c'est-à-dire qui, pour chaque monture, permet de déterminer si le palpeur s'est écarté du fond du drageoir.

La valeur seuil peut être calculée en fonction des variations, sur tout ou partie de la courbe palpée, de la dérivée première ou seconde d'une première fonction de l'une au moins des trois coordonnées de la courbe palpée par rapport à une seconde fonction d'une autre au moins des trois coordonnées de la courbe palpée.

La valeur seuil peut être égale à une fonction de l'écart type de la variation, sur tout ou partie de la courbe palpée, de la dérivée première ou seconde d'une première fonction de l'une au moins des trois coordonnées de la courbe palpée par rapport à une seconde fonction d'une autre au moins des trois coordonnées de la courbe palpée.

La valeur seuil peut être déduite en partie au moins d'un degré de cambrure de la monture de lunettes calculé à partir de la géométrie de la courbe palpée.

Ainsi, lorsque la monture de lunettes est identifiée comme étant peu cambrée, et que le risque que le palpeur se soit écarté du fond du drageoir est faible, on peut augmenter la valeur seuil de manière à diminuer le nombre de zones d'anomalie, ce qui revient à diminuer le temps de calcul de la géométrie réelle du contour du drageoir. On diminue d'ailleurs ainsi la probabilité de définir une zone du drageoir comme zone d'anomalie (c'est-à-dire imparfaitement) lue alors qu'elle avait en réalité été lue correctement. En revanche, lorsque la monture de lunettes est identifiée comme étant très cambrée, et que le risque que le palpeur se soit écarté du fond du drageoir est important, on peut diminuer la valeur seuil de manière à s'assurer que toutes les zones ayant été mal lues soient détectées. Le degré de cambrure de la monture peut être calculé à partir de la géométrie de la courbe palpée le long du drageoir. Il peut également être déterminé de visu par l'opticien qui se charge alors de rentrer cette donnée dans l'appareil de lecture de contour de drageoir utilisé.

Selon une caractéristique avantageuse de l'invention, la recherche des éventuelles zones d'anomalie est réalisée dans la seule partie temporale du cercle de la monture de lunettes. Les montures n'étant généralement versées que dans les parties temporales des cercles de la monture, le palpeur ne risque de s'écarter du fond du drageoir que dans ces seules zones des cercles de la monture. Par conséquent, la recherche des zones d'anomalie n'est réalisée que dans ces seules parties temporales des cercles de la monture, ce qui permet de diminuer le temps de calcul de la géométrie réelle du contour du drageoir sans pour autant nuire à la précision des calculs.

Selon l'invention, la correction de la géométrie de chaque zone d'anomalie de la courbe palpée est réalisée :

- en palpant à nouveau chaque zone d'anomalie du contour du drageoir, le palpeur étant piloté durant ce nouveau palpage selon des secondes consignes transversales et/ou longitudinales de positions et/ou d'efforts dépendant des zones d'anomalie trouvées ; ou

- en substituant à la géométrie de chaque zone d'anomalie de la courbe palpée, une géométrie reconstruite par calcul selon des critères de continuité d'ordre de dérivation supérieur ou égale à 1 avec les zones de la courbe palpée adjacentes à ladite zone d'anomalie ; ou encore

- en palpant une pluralité de points de la zone d'anomalie du drageoir et en substituant à la géométrie de la courbe palpée dans chaque zone d'anomalie, une géométrie reconstruite par interpolation desdits points palpés.

L'invention a pour objet un procédé d'acquisition de la géométrie d'un contour d'un drageoir d'un cercle d'une monture de lunettes, comprenant un palpage du drageoir par glissement ou roulement d'un palpeur qui est entraîné selon la direction longitudinale du drageoir et qui est rappelé transversalement vers le fond du drageoir, la déduction de la géométrie d'une courbe palpée approchant un brin longitudinal du drageoir, et la correction de cette géométrie de courbe palpée comme décrit ci-dessus.

Avantageusement, le palpage du drageoir étant réalisé en pilotant le palpeur selon des premières consignes transversales et/ou longitudinales de positions et/ou d'efforts, la correction de la géométrie de chaque zone d'anomalie de la courbe palpée est réalisée en palpant à nouveau chaque zone d'anomalie du contour du drageoir, le palpeur étant piloté durant ce nouveau palpage selon des secondes consignes transversales et/ou longitudinales de positions et/ou d'efforts différentes desdites premières consignes.

Avantageusement alors, on prévoit une étape supplémentaire de vérification que la monture de lunettes est restée immobile pendant le palpage du drageoir. Il arrive que sous l'effet des efforts engendrés par le palpeur sur le cercle de la monture de lunettes, la monture bouge lors du palpage du drageoir. Ce mouvement de la monture risque de fausser la lecture de la géométrie du contour du drageoir, et par conséquent de fausser le résultat de la recherche de zones d'anomalie du drageoir. Il convient donc de s'assurer de l'immobilité de la monture. Vérifier, suite au palpage du drageoir, que le point de départ et d'arrivée du palpeur sont confondus permet par exemple de s'assurer que la monture n'a pas bougé.

Pour s'en assurer plus sûrement encore, il est également possible de palper le drageoir en pilotant le palpeur pour qu'il réalise plus d'une révolution complète, de manière à lire deux fois une même zone du drageoir. La vérification que les positions de cette zone en début et en fin de palpage coïncident permet de s'assurer que la monture de lunettes n'a pas bougé.

Si la monture de lunettes n'est pas restée immobile, on procède à un nouveau palpage de l'ensemble du contour du drageoir duquel est déduit la géométrie de la courbe palpée.

DESCRIPTION DÉTAILLÉE D'UN EXEMPLE DE RÉALISATION

La description qui va suivre en regard des dessins annexés, donnés à titre d'exemples non limitatifs, fera bien comprendre en quoi consiste l'invention et comment elle peut être réalisée.

Sur les dessins annexés :

- la figure 1 est une vue d'ensemble en perspective d'un appareil de lecture de géométrie de contour de drageoir d'une monture de lunettes ;
- la figure 2 est une vue en perspective d'une portion d'un drageoir de la monture de lunettes de la figure 1 ;
- la figure 3 est une vue en plan d'une courbe palpée approchant la forme du contour du drageoir de la monture de lunettes de la figure 1, superposé avec un graphique représentant en coordonnées polaires la variation de l'accélération radiale du palpeur de l'appareil de lecture de la figure 1 ;
- la figure 4 est un graphique représentant la variation de l'accélération radiale du palpeur en fonction de la position angulaire de ce palpeur ;
- la figure 5 est un graphique représentant une fonction binaire de la position angulaire du palpeur, qui est égale à 1 dans les seules zones du drageoir où l'accélération radiale du palpeur dépasse une valeur seuil ;
- la figure 6 est un graphique représentant une autre fonction binaire de la position angulaire du palpeur, qui est égale à 1 dans les zones d'anomalie du drageoir ; et
- la figure 7 est une vue en plan de la courbe palpée de la figure 3 après correction.

Pour la mise en oeuvre du procédé selon l'invention, il faut disposer d'un appareil de lecture de la géométrie des contours des drageoirs de cercles de montures de lunettes. Cet appareil de lecture est un moyen bien connu de l'homme du métier et ne fait pas en propre l'objet de l'invention décrite. Il est par exemple possible d'utiliser un appareil de lecture tel que décrit dans le brevet EP 0 750 172 ou commercialisé par Essilor International sous la marque Kappa ou sous la marque Kappa CT.

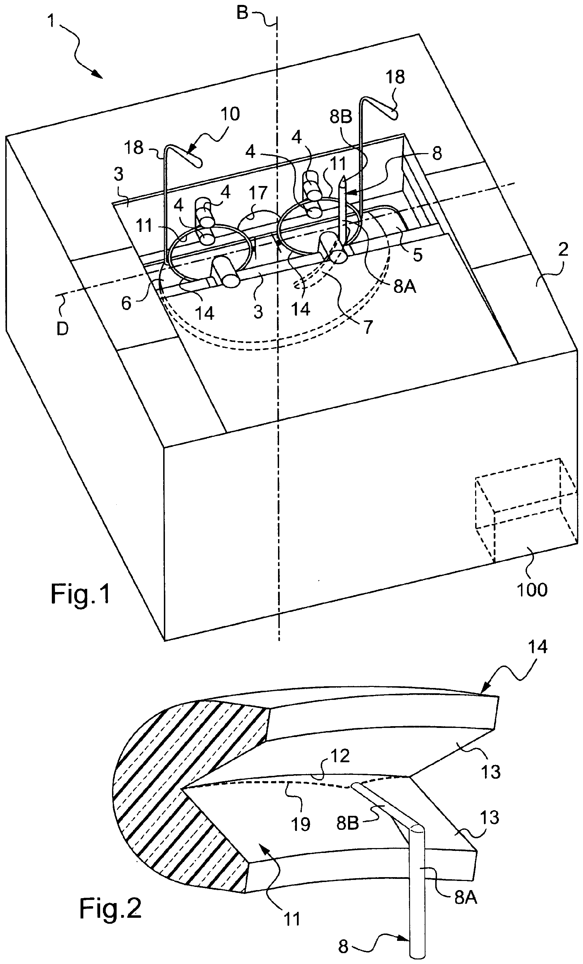

La figure 1 est une vue générale de cet appareil de lecture 1, tel qu'il se présente à son utilisateur. Cet appareil comporte un capot supérieur 2 recouvrant l'ensemble de l'appareil à l'exception d'une portion supérieure centrale.

L'appareil de lecture 1 est destiné à relever la géométrie des contours intérieurs des drageoirs 11 d'une monture de lunettes 10 choisie par un porteur.

La monture de lunettes 10 est ici de type cerclé. Elle comporte deux cercles 14, à savoir un cercle droit et un cercle gauche destinés à être respectivement positionnés en regard de l'oeil droit et de l'oeil gauche du porteur lorsque ce dernier porte ladite monture. Elle comporte en outre un pontet 17 liant les deux cercles 14 et deux branches 18 liées chacune à l'un des deux cercles 14. Chacun des cercles de la monture de lunettes 10 est adapté à accueillir une lentille ophtalmique pourvue sur sa tranche d'un biseau.

Comme le montre la figure 2, les deux cercles 14 présentent chacun une rainure intérieure, communément appelée drageoir 11, dans laquelle le biseau de la lentille correspondante est adapté à s'emboîter. Chaque drageoir 11 présente une section ici en forme de dièdre (en V), avec une arête de fond 12 bordée par deux flancs 13. Il pourrait en variante présenter une section de forme légèrement différente, par exemple en U.

On appellera ici « brin longitudinal du drageoir » tout brin qui appartient à l'un ou l'autre des flancs du drageoir et qui est parallèle ou confondu avec l'arête de fond 12 du drageoir 11. On considérera en particulier un premier brin longitudinal confondu avec l'arête de fond 12 du drageoir 11.

La monture de lunettes 10 est ici cambrée si bien que les drageoirs 11 sont versés, c'est-à-dire vrillés. Par conséquent, chaque section transversale du drageoir 11 présente une inclinaison propre. Cette inclinaison est généralement minimale au niveau des zones nasales des cercles de la monture (à proximité du pontet 17) et maximale au niveau des zones temporales des cercles de la monture (à proximité des zones d'accroche des branches 18 sur les cercles 14 de la monture).

L'appareil de lecture 1 représenté sur la figure 1 comporte un jeu de deux mâchoires 3 dont au moins une des mâchoires 3 est mobile par rapport à l'autre de sorte que les mâchoires 3 peuvent être rapprochées ou écartées l'une de l'autre pour former un dispositif de serrage de la monture. Chacune des mâchoires 3 est de plus munie de deux pinces formées chacune de deux plots 4 mobiles pour être adaptés à serrer entre eux la monture de lunettes 10 afin de l'immobiliser.

Dans l'espace laissé visible par l'ouverture supérieure centrale du capot 2, un châssis 5 est visible. Une platine (non visible) peut se déplacer en translation sur ce châssis 5 selon un axe de transfert D. Sur cette platine est monté tournant un plateau tournant 6. Ce plateau tournant 6 est donc apte à prendre deux positions sur l'axe de transfert D, une première position dans laquelle le centre du plateau tournant 6 est disposé entre les deux paires de plots 4 fixant le cercle droit de la monture de lunettes 10, et une seconde position dans laquelle le centre du plateau tournant 6 est disposé entre les deux paires de plots 4 fixant le cercle gauche de la monture de lunettes 10.

Le plateau tournant 6 possède un axe de rotation B défini comme l'axe normal à la face avant de ce plateau tournant 6 et passant par son centre. Il est adapté à pivoter par rapport à la platine. Le plateau tournant 6 comporte par ailleurs une lumière 7 oblongue en forme d'arc de cercle à travers laquelle saille un palpeur 8 comportant une tige support 8A et, à son extrémité libre, un doigt de palpage 8B destiné à suivre par glissement ou éventuellement roulement le brin longitudinal de chaque drageoir 11 de la monture de lunettes 10.

L'appareil de lecture 1 comporte des moyens d'actionnement (non représentés) adaptés, d'une part, à faire glisser la tige support 8A le long de la lumière 7 afin de l'éloigner ou de la rapprocher du centre du plateau tournant 6, et, d'autre part, à positionner le doigt de palpage 8B du palpeur 8 à une altitude plus ou moins importante par rapport au plan de la face avant du plateau tournant 6.

En résumé, le palpeur 8 est pourvu de trois degrés de liberté, dont un premier degré de liberté TETA constitué par l'aptitude du palpeur 8 à pivoter autour de l'axe de rotation B grâce à la rotation du plateau tournant 6 par rapport à la platine, un deuxième degré de liberté Z constitué par l'aptitude du palpeur 8 à se translater axialement selon un axe parallèle à l'axe de rotation B du plateau tournant 6, et un troisième degré de liberté R constitué par l'aptitude du palpeur 8 à se mouvoir radialement par rapport à l'axe de rotation B grâce à sa liberté de mouvement le long de l'arc de cercle formé par la lumière 7.

Chaque point lu par l'extrémité du doigt de palpage 8B du palpeur 8 est repéré dans un système de coordonnées correspondant R, TETA, Z.

L'appareil de lecture 1 comporte par ailleurs des moyens d'acquisition de la position R, TETA, Z de l'extrémité du doigt de palpage 8B du palpeur 8.

Il comporte également des moyens de pilotage des moyens d'actionnement de l'appareil, destinés à piloter la position de l'extrémité du doigt de palpage 8B du palpeur 8.

L'ensemble de ces moyens d'acquisition et de pilotage est intégré dans un dispositif électronique et/ou informatique 100 permettant, d'une part, d'actionner les moyens d'actionnement de l'appareil, et, d'autre part, de récupérer et d'enregistrer les données que lui transmettent des capteurs intégrés à l'appareil de lecture 1.

Pour la mise en oeuvre du procédé selon l'invention, en référence à la figure 1, préalablement au démarrage du palpage du drageoir 11 de chaque cercle 14 de la monture de lunettes 10, on commence par fixer la monture de lunettes 10 dans l'appareil de lecture 1. Pour cela, la monture est insérée entre les plots 4 des mâchoires 3 de telle sorte que chacun des cercles de la monture est prêt à être palpé selon un trajet démarrant par l'insertion du palpeur 8 entre deux plots 4 correspondant à la partie inférieure de la monture, puis suivant le drageoir 11 de la monture, afin de couvrir toute la circonférence du cercle 14 de la monture de lunettes 10.

On étudiera ici plus particulièrement l'acquisition de la géométrie du contour du drageoir du cercle gauche de la monture de lunettes.

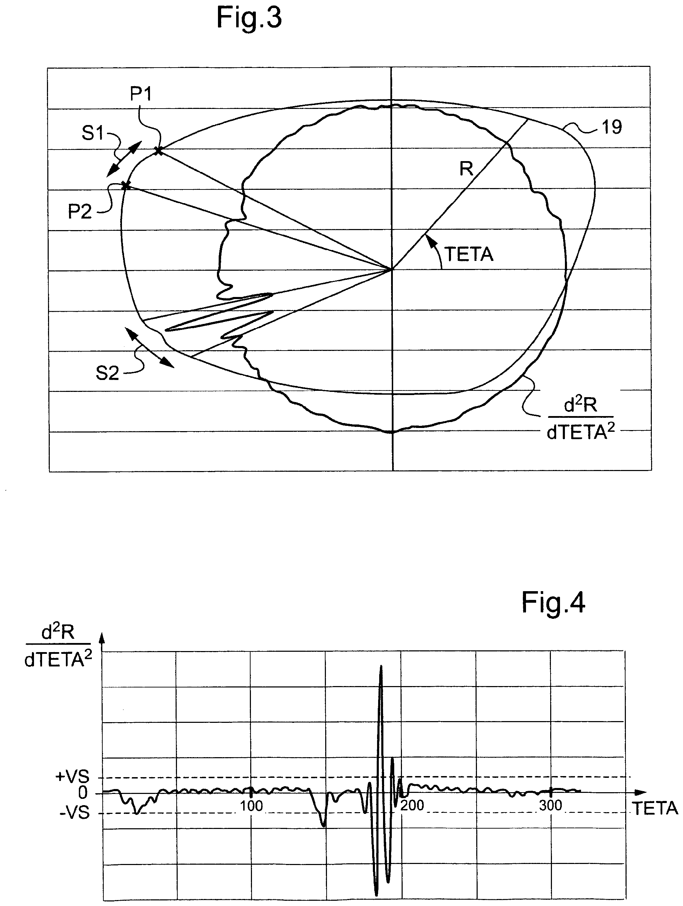

Comme le montre la figure 3, les moyens d'acquisition définissent comme nulle la position angulaire TETA du palpeur 8 lorsque son extrémité est disposée du côté de la zone nasale du cercle 14 de la monture, à angle droit par rapport à sa position d'insertion entre les deux plots 4.

Une fois la monture de lunettes 10 fixée, les moyens de pilotage commandent la rotation du plateau tournant 6 de sorte que l'extrémité du palpeur 8 se déplace longitudinalement le long de l'arête de fond 12 du drageoir 11.

La conservation du contact du doigt de palpage 8B avec le drageoir 11 est assurée par les moyens d'actionnement. Ces derniers exercent en effet sur le palpeur 8 un effort de rappel radial dirigé vers le drageoir 11, qui permet au doigt de palpage 8B de rester en contact avec le drageoir 11.

Ainsi, le palpeur 8 est piloté en position angulaire TETA autour de l'axe de rotation B et est guidé selon sa coordonnée radiale R et selon son altitude Z grâce à la forme en V du drageoir.

Les capteurs de l'appareil de lecture 1 relèvent pendant la rotation du plateau tournant 6 les coordonnées spatiales d'une pluralité de points du drageoir, par exemple 360 points, pour mémoriser une image numérique précise du contour du drageoir 11.

L'objectif de cette opération est en particulier que le drageoir reste durant toute la durée du palpage du drageoir 11 le plus possible en contact avec l'arête de fond 12 du drageoir 11.

Toutefois, comme le montre la figure 2, lorsque la monture est fortement galbée et que certaines zones du drageoir 11 sont très versées, il arrive que le palpeur glisse le long de l'un des flancs 13 du drageoir et s'écarte de l'arête de fond 12 du drageoir.

Le dispositif électronique et/ou informatique 100 déduit ainsi de ce palpage, non pas la géométrie exacte du premier brin longitudinal (confondu avec l'arête de fond du drageoir), mais plutôt la géométrie d'une courbe palpée 19 approchant la géométrie du premier brin longitudinal du drageoir.

L'objectif de l'invention est donc de redéfinir la géométrie de la courbe palpée 19 dans les zones où le palpeur 8 s'est écarté du fond du drageoir 11 pour définir une nouvelle géométrie de la courbe palpée plus proche de celle du premier brin longitudinal.

A la suite de l'opération de palpage du drageoir 11 du cercle gauche 14 de la monture de lunettes 10, le dispositif électronique et/ou informatique 100 procède à une étape de vérification que la monture de lunettes 10 est restée immobile durant toute la durée du palpage du drageoir 11. Pour ce faire, il compare les coordonnées spatiales des points de départ et d'arrivée du palpeur 8. Si la monture est restée immobile pendant le palpage du drageoir 11, ces points sont confondus. En revanche, si la monture a bougé, ces points présentent des coordonnées spatiales différentes. Dans ce cas, le dispositif électronique et/ou informatique procède à un deuxième palpage de l'ensemble du contour du drageoir 11.

En variante, il est également possible de palper le drageoir en pilotant le palpeur pour qu'il réalise plus d'une révolution complète, de manière à lire deux fois une même zone du drageoir. La vérification que les positions de cette zone en début et en fin de palpage coïncident permet de s'assurer plus sûrement encore que la monture de lunettes n'a pas bougé.

A l'issue de cette étape de vérification, si la monture de lunettes n'a pas bougé, le dispositif électronique et/ou informatique 100 procède à une étape de recherche de la ou des éventuelles zones d'anomalie du contour du drageoir 11.

Pour cela, le dispositif comporte des moyens de calcul qui :

- calculent la dérivée première ou seconde d'une première fonction de l'une au moins des trois coordonnées (R, THETA, Z) de la courbe palpée 19 par rapport à une seconde fonction d'une autre au moins des trois coordonnées R, THETA, Z de la courbe palpée 19 ;
- recherchent les zones d'anomalie en tant que zones de la courbe palpée 19 dans lesquelles cette dérivée première ou seconde dépasse, en valeur absolue, une valeur seuil VS.

En l'espèce, les moyens de calcul déterminent, en fonction de la position angulaire TETA des points de la courbe palpée 19, la dérivée seconde des coordonnées radiales R des points de la courbe palpée 19 par rapport à leurs positions angulaires TETA. Le résultat de ce calcul est représenté sur les figures 3 et 4. La variation de cette dérivée seconde correspond à la variation de l'accélération radiale $d^2(R)/d(TETA)^2$ du palpeur 8 durant le palpage du drageoir 11.

On observe en particulier sur la figure 3 que les zones dans lesquelles l'accélération radiale du palpeur 8 oscille fortement correspondent aux zones d'anomalie S1, S2 imparfaitement lues du drageoir 11. En d'autres termes, les oscillations de l'accélération radiale du palpeur 8 indiquent une mauvaise lecture du drageoir par le palpeur.

Les moyens de calcul définissent donc une zone du drageoir comme « zone d'anomalie » une zone dans laquelle l'accélération radiale du palpeur 8 dépasse, en valeur absolue, une valeur seuil VS. Il s'agit donc d'une zone imparfaitement lue.

Cette valeur seuil VS est ici prédéterminée, c'est-à-dire constante quelle que soit la monture de lunettes installée dans l'appareil de lecture 1. Elle peut par exemple être égale à 400 microns/rad$^2$.

En variante, la valeur seuil peut être, non pas absolue, mais relative à la monture de lunettes 10 choisie par le porteur et installée dans l'appareil de lecture 1. Selon cette variante, la valeur seuil est calculée en fonction des variations, sur l'ensemble du contour du drageoir 11, de l'accélération radiale du palpeur 8. Cette valeur seuil peut par exemple être formée par une valeur moyenne de la variation de l'accélération radiale du palpeur, ou encore par l'écart type de cette variation sur l'ensemble du contour du drageoir 11.

Selon une autre variante de réalisation de l'invention, la valeur seuil peut être choisie en fonction du degré de cambrure de la monture de lunettes. En effet, plus la monture de lunettes est cambrée, plus la probabilité que des zones du drageoir 11 aient été mal lues par le palpeur 8 est grande. La valeur seuil doit donc être choisie plus faible pour les montures fortement cambrées. Dans cette variante, le dispositif électronique et/ou informatique 100 détermine l'écart entre l'altitude Z maximale et l'altitude Z minimale de la courbe palpée 19 ; cet écart est proportionnel au degré de cambrure de la monture de lunettes. Selon que cet écart est respectivement inférieur ou supérieur à une valeur limite (par exemple 15,8 millimètres), la valeur seuil est choisie plus ou moins grande.

Quelle que soit la valeur seuil VS choisie, afin de déterminer les secteurs angulaires S1, S2 dans lesquels se trouvent les zones d'anomalie du cercle gauche 14 de la monture de lunettes 10, le dispositif électronique et/ou informatique procède au traitement des variations de l'accélération radiale du palpeur 8.

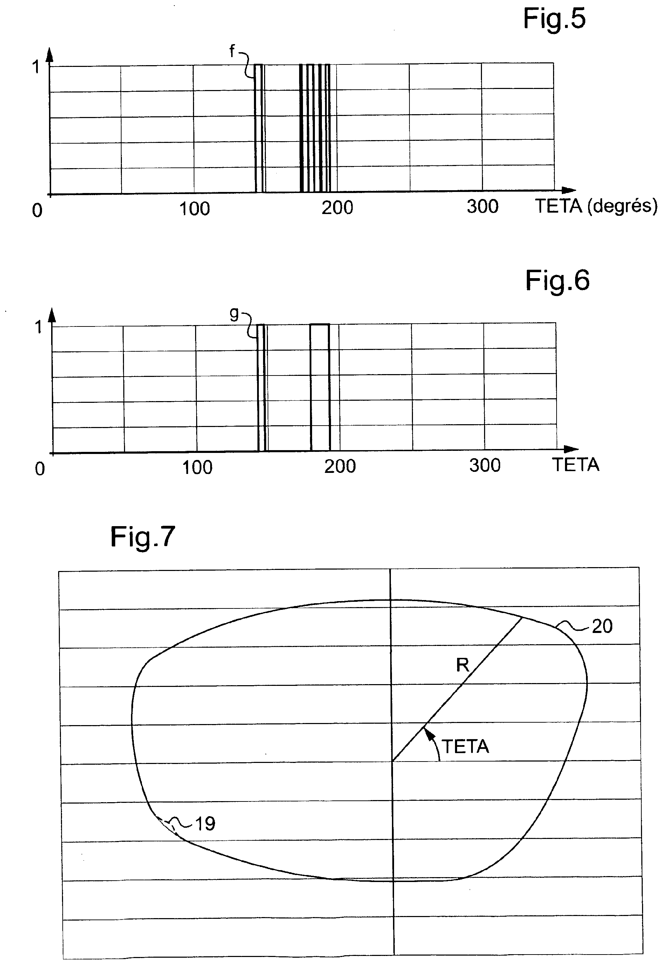

Pour cela, il définit une fonction binaire f, représentée sur la figure 5, qui est fonction de la position angulaire TETA du palpeur 8. Cette fonction binaire f est définie comme étant égale à 1 lorsque l'accélération radiale du palpeur dépasse, en valeur absolue, la valeur seuil VS choisie, et sinon égale à 0.

Afin de réduire le temps de calcul de la fonction binaire f, cette fonction peut être directement définie comme nulle dans les secteurs angulaires des cercles où le drageoir est peu versé. Par conséquent, elle peut donc être définie comme nulle lorsque la position angulaire TETA du palpeur est comprise entre 90 et 270 degrés (pour le cercle droit, cet intervalle est compris entre -90 et 90 degrés).

Comme le montre la figure 4, l'accélération radiale du palpeur présente des oscillations, si bien que dans une même zone de fortes oscillations correspondant à une unique zone d'anomalie S1, S2 du drageoir, l'accélération radiale du palpeur passe successivement au-dessus et en dessous de la valeur seuil VS. La fonction binaire f présente donc, pour une même zone de fortes oscillations, une succession de créneaux.

Afin d'obtenir un unique créneau par zone de fortes oscillations, le dispositif électronique et/ou informatique 100 détermine une fonction filtrée g, représentée sur la figure 6, qui est fonction de la position angulaire TETA du palpeur 8. Cette fonction filtrée g est définie comme étant égale à 1 non seulement dans les secteurs angulaires où la fonction binaire f est égale à 1, mais aussi dans les secteurs angulaires situés entre deux créneaux de la fonction f, à condition que ces deux créneaux soient proches l'un de l'autre (séparés angulairement de moins de 3,5 degrés par exemple).

Ainsi, les zones d'anomalie du drageoir, dont les secteurs angulaires sont séparés par un intervalle angulaire inférieur à un intervalle minimum prédéfini, sont concaténées pour définir ensemble une zone globale d'anomalie. Il arrive en effet que plusieurs portions du contour du drageoir soient imparfaitement lues par le palpeur. Dans chacune de ces portions du contour du drageoir, la dérivée de la trajectoire du palpeur peut osciller fortement autour de zéro. Chaque passage de la dérivée au-dessus de la valeur seuil définit une petite zone du drageoir comme zone d'anomalie imparfaitement lue. Ces oscillations engendrent donc une pluralité de petites zones d'anomalie qui correspondent en réalité à une même portion du drageoir anormale ou imparfaitement lue. Selon l'invention, on assemble ces petites zones d'anomalie de manière à ne définir qu'une même zone globale d'anomalie afin de ne pas fausser les calculs de correction de la géométrie de la courbe palpée.

En variante à la recherche des zones d'anomalie par dépassement d'un seuil de dérivée première ou seconde, on peut prévoir que les moyens de calcul recherchent lesdites éventuelles zones d'anomalie S1, S2 de la courbe palpée 19 par la mise en oeuvre des étapes suivantes.

Le dispositif électronique et/ou informatique 100 découpe la courbe palpée en plusieurs portions de découpage. Pour une meilleure finesse d'analyse de la courbe, on prévoira que les portions de découpage de la courbe palpée 19 se superposent partiellement.

Le dispositif électronique et/ou informatique 100 détermine ensuite une portion de courbe d'interpolation entre les extrémités de chaque portion de découpage de la courbe palpée 19. A cet effet, le dispositif électronique et/ou informatique 100 calcule, pour chaque portion de découpage, les coefficients d'un polynôme d'interpolation Q(TETA), par exemple d'ordre 3, construit selon des critères de continuité avec les zones de la courbe palpée 19 adjacentes à la portion de découpage correspondante. Bien sûr, on pourrait également utiliser un polynôme d'interpolation d'ordre supérieur. Ces critères de continuité sont les suivants. Soient P1 et P2 les deux points d'extrémités qui délimitent l'une des portion de découpage de la courbe palpée, dont les coordonnées spatiales sont respectivement R1, TETA1, Z1 et R2, TETA2, Z2. Alors, les coefficients du polynôme d'interpolation Q(TETA) sont calculés de sorte qu'au point P1, cette fonction polynomiale soit égale à R1 et la dérivée de cette fonction soit égale à la dérivée d'ordre 1 au point P1 de la coordonnée radiale R de la courbe palpée 19 par rapport à sa coordonnée angulaire TETA, soit :

$$Q(TETA1) = R1 \text{ et } dQ(TETA)/dTETA_{TETA=TETA1} = dR/dTETA_{R=R1}$$

En outre, les coefficients du polynôme d'interpolation Q(TETA) sont calculés de sorte qu'au point P2, cette fonction polynomiale soit égale à R2 et la dérivée de cette fonction soit égale à la dérivée d'ordre 1 au point P2 de la coordonnée radiale R de la courbe palpée 19 par rapport à sa coordonnée angulaire TETA, soit :

$$Q(TETA2) = R2 \text{ et } dQ(TETA)/dTETA_{TETA=TETA2} = dR/dTETA_{R=R2}$$

On définit ainsi un polynôme d'interpolation en tant que portion de courbe d'interpolation associée à chaque portion de découpage de la courbe palpée du drageoir.

Les moyens de calcul recherchent ensuite, parmi les portions de découpage de la courbe palpée 19, d'éventuelles portions de découpage anormales s'écartant de la portion de courbe d'interpolation correspondante au-delà d'un seuil donné, en utilisant par exemple l'écart maximum ou l'écart type entre le rayon interpolé et le rayon mesuré. On peut par exemple considérer qu'une portion de découpage est anormale lorsque l'écart maximum sur cette portion est supérieur à une valeur seuil comprise entre 0,5 mm et 1 mm selon la sensibilité recherchée, ou lorsque l'écart type est supérieur à une valeur seuil comprise entre 0,1 millimètre et 0,2 millimètre selon la sensibilité recherchée.

Les moyens de calcul déterminent enfin les zones d'anomalies S1, S2 en fonction des éventuelles portions de découpage anormales trouvées.

Quoi qu'il en soit, à ce stade, les zones d'anomalie S1, S2 du drageoir 11 sont donc connues du dispositif électronique et/ou informatique 100 ; elles se situent en effet dans les secteurs angulaires dans lesquels la fonction filtrée g est égale à 1. Dans l'exemple illustré sur les figures 2 à 6, le contour du drageoir 11 présente deux zones d'anomalie S1, S2 toutes deux situées du côté de la partie temporale du cercle gauche 14 de la monture de lunettes 10.

Le dispositif électronique et/ou informatique procède alors à une étape de correction de la géométrie de la courbe palpée 19 dans ces zones d'anomalie S1, S2.

Pour ce faire, le dispositif substitue aux parties de la géométrie de la courbe palpée 19 situées dans les zones d'anomalie S1, S2, des parties reconstruites par calcul. Les géométries de ces parties reconstruites sont ici définies mathématiquement par des fonctions polynomiales.

A cet effet, le dispositif électronique et/ou informatique 100 calcule, pour chaque partie reconstruite, les coefficients d'un polynôme d'interpolation Q(TETA), par exemple d'ordre 3, construit selon des critères de continuité avec les zones de la courbe palpée 19 adjacentes à la zone d'anomalie correspondante. Ce polynôme d'interpolation est en l'espèce le même que celui utilisé précédemment pour définir la portion de courbe d'interpolation associée à chaque portion de découpage, dans la seconde variante de mise en oeuvre du calcul de détermination des zones d'anomalie. Bien entendu, on pourrait également utiliser ici un polynôme d'interpolation différent, en particulier un polynôme d'ordre supérieur.

En référence à la figure 3, ces critères de continuité sont les suivants. Soient P1 et P2 les deux points d'extrémités qui délimitent l'une des zones d'anomalie S1 du drageoir 11, dont les coordonnées spatiales sont respectivement R1, TETA1, Z1 et R2, TETA2, Z2. Alors, les coefficients du polynôme d'interpolation Q(TETA) sont calculés de sorte qu'au point P1, cette fonction polynomiale soit égale à R1 et la dérivée de cette fonction soit égale à la dérivée d'ordre 1 au point P1 de la coordonnée radiale R de la courbe palpée 19 par rapport à sa coordonnée angulaire TETA, soit :

$$Q(TETA1) = R1 \text{ et } dQ(TETA)/dTETA_{TETA=TETA1} = dR/dTETA_{R=R1}$$

En outre, les coefficients du polynôme d'interpolation Q(TETA) sont calculés de sorte qu'au point P2, cette fonction polynomiale soit égale à R2 et la dérivée de cette fonction soit égale à la dérivée d'ordre 1 au point P2 de la coordonnée radiale R de la courbe palpée 19 par rapport à sa coordonnée angulaire TETA, soit :

$$Q(TETA2) = R2 \text{ et } dQ(TETA)/dTETA_{TETA=TETA2} = dR/dTETA_{R=R2}$$

On définit ainsi un polynôme d'interpolation par zone d'anomalie du drageoir. Ces polynômes définissent des courbes reconstruites destinées à remplacer les zones d'anomalie imparfaitement lues de la courbe palpée 19. Cet assemblage de courbes définit une nouvelle courbe corrigée 20 qui est représentée sur la figure 7, qui est continue et qui ne présente pas de points d'inflexion. Sa géométrie est alors très proche de celle du premier brin longitudinal.

En variante, la reconstruction des zones d'anomalie du drageoir peut être réalisée différemment, au moyen d'un palpage de ces zones.

Ainsi, la correction de la géométrie de la courbe palpée 19 peut être réalisée en palpant une deuxième fois chaque zone d'anomalie S1, S2 du contour du drageoir 11, et en remplaçant les zones mal lues de la courbe palpée 19 par des courbes dont les formes sont définies à partir de ce deuxième palpage du drageoir 11. A cet effet, les moyens de commande de l'appareil de lecture 1 pilotent le palpeur 8 dans ces zones d'anomalie S1, S2, de manière à palper le drageoir à une vitesse très faible. Cette vitesse très faible permet de s'assurer que le palpeur 8 reste au contact du fond du drageoir 11 et ne dévie pas de sa trajectoire en glissant sur l'un des flancs 13 du drageoir 11.

La correction de la géométrie de la courbe palpée 19 peut sinon être réalisée en palpant une pluralité de points des zones d'anomalie S1, S2 du drageoir 11 et en substituant à la géométrie de la courbe palpée 19 dans ces zones d'anomalie, une géométrie reconstruite par interpolation desdits points palpés. Le polynôme d'interpolation alors utilisé présente un ordre qui est fonction du nombre de points palpés sur chaque zone d'anomalie. Cette variante permet de s'assurer que la géométrie reconstruite est très proche de la géométrie réelle du premier brin longitudinal, même si la zone d'anomalie s'étend sur un secteur angulaire important.

Selon un autre mode de réalisation de l'invention, la recherche des zones d'anomalie du drageoir peut être réalisée, non pas à partir de l'accélération radiale du palpeur mais plutôt à partir de son accélération axiale selon l'axe de rotation B. La valeur seuil utilisée est alors différente, par exemple de 100 microns/rad$^2$ ; le procédé pour mettre en oeuvre l'invention reste toutefois identique.

La recherche des zones d'anomalie imparfaitement lues du drageoir peut également être réalisée à partir non seulement de l'accélération radiale du palpeur 8, mais aussi de son accélération axiale. Dans ce cas, lorsque l'une ou l'autre de ces accélérations dépasse la valeur seuil qui lui est associée, la zone palpée est définie comme zone d'anomalie.

En variante, la recherche des zones d'anomalie du drageoir peut être réalisée, non pas à partir de l'accélération radiale du palpeur mais plutôt à partir de sa vitesse radiale et/ou axiale. La mise en oeuvre de cette variante est identique à celle décrite précédemment, seules les valeurs seuils utilisées changent. On peut par exemple fixer un seuil de vitesse radiale du palpeur de 5 mm/rad ou un seuil de vitesse axiale de 1 mm/rad.

La présente invention n'est nullement limitée aux modes de réalisation décrits et représentés.

**Revendications**

1. Procédé d'acquisition de la géométrie d'un contour d'un drageoir (11) d'un cercle (14) d'une monture de lunettes (10), comprenant un palpage du drageoir (11) par glissement ou roulement d'un palpeur (8) qui est entraîné selon la direction longitudinale du drageoir (11) et qui est rappelé transversalement vers le fond du drageoir (11), la déduction de la géométrie d'une courbe palpée (19) approchant un brin longitudinal (12) du drageoir (11), et la correction de cette géométrie de courbe palpée, **caractérisé en ce que** la correction de la courbe palpée comporte :

- une recherche d'une ou plusieurs éventuelles zones d'anomalie (S1, S2) de la courbe palpée (19) dans laquelle le palpeur (8) s'est écarté du fond du drageoir (11), et
- si une ou plusieurs zones d'anomalie (S1, S2) sont trouvées, une correction de la géométrie de chaque zone d'anomalie (S1, S2) de la courbe palpée (19) :

    - en palpant à nouveau chaque zone d'anomalie (S1, S2) du contour du drageoir (11), le palpeur (8) étant piloté durant ce nouveau palpage selon des secondes consignes transversales et/ou longitudinales de positions et/ou d'efforts dépendant des zones d'anomalie (S1, S2) trouvées, ou
    - en substituant à la géométrie de chaque zone d'anomalie (S1, S2) de la courbe palpée (19), une géométrie reconstruite par calcul selon des critères de continuité d'ordre de dérivation supérieur ou égale à 1 avec les zones de la courbe palpée (19) adjacentes à ladite zone d'anomalie (S1, S2), ou
    - en palpant une pluralité de points de la zone d'anomalie (S1, S2) du drageoir (11) et en substituant à la géométrie de la courbe palpée (19) dans chaque zone d'anomalie (S1, S2), une géométrie reconstruite par interpolation desdits points palpés.

2. Procédé selon la revendication 1, dans lequel lesdites éventuelles zones d'anomalie (S1, S2) de la courbe palpée (19) sont recherchées en tant que zones dans lesquelles la dérivée première ou seconde d'une première fonction de l'une au moins des trois coordonnées (R, THETA, Z) de la courbe palpée (19) par rapport à une seconde fonction d'une autre au moins des trois coordonnées (R, THETA, Z) de la courbe palpée (19) dépasse, en valeur absolue, une valeur seuil (VS) relative à la monture considérée ou absolue.

3. Procédé selon la revendication précédente, dans lequel la recherche des éventuelles zones d'anomalie (S1, S2) de la courbe palpée (19) comporte la recherche des éventuels secteurs angulaires (S1, S2), repérés autour d'un axe (B) intérieur et globalement transversal à la courbe palpée (19), dans lesquels la dérivée première ou seconde d'une coordonnée radiale (R) et/ou axiale (Z) de la courbe palpée (19) par rapport à une autre coordonnée angulaire (TETA) de la courbe palpée (19) est supérieure, en valeur absolue, à ladite valeur seuil (VS).

4. Procédé selon la revendication 1, dans lequel la recherche desdites éventuelles zones d'anomalie (S1, S2) de la courbe palpée (19) comporte les étapes suivantes :

    - découpage de la courbe palpée (19) en plusieurs portions de découpage,
    - calcul d'une portion de courbe d'interpolation entre les extrémités de chaque portion de découpage de la courbe palpée (19),
    - recherche, parmi les portions de découpage de la courbe palpée (19), d'éventuelles portions de découpage anormales s'écartant de la portion de courbe d'interpolation correspondante au-delà d'une valeur seuil donnée,
    - détermination desdites zones d'anomalies (S1, S2) en fonction des éventuelles portions de découpage anormales trouvées.

5. Procédé selon la revendication précédente, dans lequel les portions de découpage de la courbe palpée (19) se superposent partiellement.

6. Procédé selon l'une des revendications 2 à 5, dans lequel ladite valeur seuil (VS) est prédéterminée et est commune à plusieurs montures de lunettes (10).

7. Procédé selon l'une des revendications 2 et 3, dans lequel ladite valeur seuil (VS) est calculée en fonction des variations, sur tout ou partie de la courbe palpée (19), de la dérivée première ou seconde d'une première fonction de l'une au moins des trois coordonnées (R, THETA, Z) de la courbe palpée (19) par rapport à une seconde fonction d'une autre au moins des trois coordonnées (R, THETA, Z) de la courbe palpée (19).

8. Procédé selon la revendication précédente, dans lequel la valeur seuil (VS) est égale à une fonction de l'écart type de la variation, sur tout ou partie de la courbe palpée (19), de la dérivée première ou seconde d'une première fonction de l'une au moins des trois coordonnées (R, THETA, Z) de la courbe palpée (19) par rapport à une seconde fonction d'une autre au moins des trois coordonnées (R, THETA, Z) de la courbe palpée (19).

9. Procédé selon l'une des revendications 2 à 5, dans lequel ladite valeur seuil (VS) est déduite en partie au moins d'un degré de cambrure de la monture de lunettes (10) calculé à partir de la géométrie de la courbe palpée (19).

10. Procédé selon l'une des revendications 2 à 5, dans lequel la recherche des éventuelles zones d'anomalie (S1, S2) est réalisée dans la seule partie temporale du cercle (17) de la monture de lunettes (10).

11. Procédé selon l'une des revendications précédentes, dans lequel le palpage du drageoir (11) étant réalisé en pilotant le palpeur (8) selon des premières consignes transversales et/ou longitudinales de positions et/ou d'efforts, la correction de la géométrie de chaque zone d'anomalie (S1, S2) de la courbe palpée (19) est réalisée en palpant à nouveau chaque zone d'anomalie (S1, S2) du contour du drageoir (11), le palpeur (8) étant piloté durant ce nouveau palpage selon des secondes consignes transversales et/ou longitudinales de positions et/ou d'efforts différentes desdites premières consignes.

12. Procédé selon l'une des revendications précédentes, comportant une étape supplémentaire de vérification que la monture de lunettes (10) est restée immobile pendant le palpage du drageoir (11).

13. Procédé selon la revendication précédente, comprenant, si la monture de lunettes (10) n'est pas restée immobile, un nouveau palpage de l'ensemble du contour du drageoir (11) duquel est déduit la géométrie de la courbe palpée (19).

**Patentansprüche**

1. Verfahren zur Erfassung der Geometrie einer Kontur einer Nut (11) eines Randes (14) einer Brillenfassung (10), welches ein Abtasten der Nut (11) durch Gleiten oder Abrollen eines Tasters (8), welcher entlang der Längsrichtung der Nut (11) angetrieben wird und welcher in Querrichtung zum Boden der Nut (11) hin vorgespannt ist, die Ableitung der Geometrie einer abgetasteten Kurve (19), die einen Längsabschnitt (12) der Nut (11) annähert, und die Korrektur dieser abgetasteten Kurvengeometrie umfasst, **dadurch gekennzeichnet, dass** die Korrektur der abgetasteten Kurve umfasst:

   - eine Suche nach einem oder mehreren eventuellen Anomaliebereichen (S1, S2) der abgetasteten Kurve (19), in welchen sich der Taster (8) vom Boden der Nut (11) entfernt hat, und
   - falls einer oder mehrere Anomaliebereiche (S1, S2) gefunden werden, eine Korrektur der Geometrie jedes Anomaliebereichs (S1, S2) der abgetasteten Kurve (19):

      - indem jeder Anomaliebereich (S1, S2) der Kontur der Nut (11) erneut abgetastet wird, wobei der Taster (8) während dieser erneute Abtastung gemäß zweiten Querrichtungs- und/oder Längsrichtungs-Sollwerten von Positionen und/oder Kräften gesteuert wird, die von den gefundenen Anomaliebereichen (S1, S2) abhängen, oder
      - indem die Geometrie jedes Anomaliebereichs (S1, S2) der abgetasteten Kurve (19) durch eine Geometrie ersetzt wird, die durch Berechnung gemäß Kriterien der Stetigkeit, mit einer Ableitungsordnung größer oder gleich 1, mit den Bereichen der abgetasteten Kurve (19), die dem Anomaliebereich (S1, S2) benachbart sind, rekonstruiert wird, oder
      - indem mehrere Punkte des Anomaliebereichs (S1, S2) der Nut (11) abgetastet werden und indem die Geometrie der abgetasteten Kurve (19) in jedem Anomaliebereich (S1, S2) durch eine Geometrie ersetzt wird, die durch Interpolation der abgetasteten Punkte rekonstruiert wurde.

2. Verfahren nach Anspruch 1, wobei die eventuellen Anomaliebereiche (S1, S2) der abgetasteten Kurve (19) als Bereiche gesucht werden, in welchen die erste oder zweite Ableitung einer ersten Funktion wenigstens einer der drei Koordinaten (R, THETA, Z) der abgetasteten Kurve (19) nach einer zweiten Funktion wenigstens einer anderen der drei Koordinaten (R, THETA, Z) der abgetasteten Kurve (19) dem absoluten Betrag nach einen absoluten oder sich auf die betrachtete Fassung beziehenden Schwellenwert (VS) überschreitet.

3. Verfahren nach dem vorhergehenden Anspruch, wobei die Suche nach den eventuellen Anomaliebereichen (S1, S2) der abgetasteten Kurve (19) die Suche nach eventuellen Winkelsektoren (S1, S2) beinhaltet, die um eine innerhalb der und im Wesentlichen quer zu der abgetasteten Kurve (19) verlaufenden Achse (B) herum angeordnet sind und in welchen die erste oder zweite Ableitung einer radialen (R) und/oder axialen (Z) Koordinate der abgetasteten Kurve (19) nach einer anderen Winkelkoordinate (TETA) der abgetasteten Kurve (19) dem absoluten Betrag nach größer als der Schwellenwert (VS) ist.

4. Verfahren nach Anspruch 1, wobei die Suche nach den eventuellen Anomaliebereichen (S1, S2) der abgetasteten Kurve (19) die folgenden Schritte umfasst:

- Zerlegen der abgetasteten Kurve (19) in mehrere Zerlegungsabschnitte,
- Berechnung eines Abschnitts einer Interpolationskurve zwischen den Enden jedes Zerlegungsabschnitts der abgetasteten Kurve (19),
- Suche, unter den Zerlegungsabschnitten der abgetasteten Kurve (19), nach eventuellen anormalen Zerlegungsabschnitten, die von dem entsprechenden Abschnitt der Interpolationskurve um mehr als einen gegebenen Schwellenwert abweichen,
- Bestimmung der Anomaliebereiche (S1, S2) in Abhängigkeit von den gefundenen eventuellen anormalen Zerlegungsabschnitten.

5. Verfahren nach dem vorhergehenden Anspruch, wobei die Zerlegungsabschnitte der abgetasteten Kurve (19) sich teilweise überlappen.

6. Verfahren nach einem der Ansprüche 2 bis 5, wobei der Schwellenwert (VS) vorbestimmt ist und mehreren Brillenfassungen (10) gemeinsam ist.

7. Verfahren nach einem der Ansprüche 2 und 3, wobei der Schwellenwert (VS) in Abhängigkeit von den Änderungen, auf der gesamten abgetasteten Kurve (19) oder einem Teil davon, der ersten oder zweiten Ableitung einer ersten Funktion wenigstens einer der drei Koordinaten (R, THETA, Z) der abgetasteten Kurve (19) nach einer zweiten Funktion wenigstens einer anderen der drei Koordinaten (R, THETA, Z) der abgetasteten Kurve (19) berechnet wird.

8. Verfahren nach dem vorhergehenden Anspruch, wobei der Schwellenwert (VS) gleich einer Funktion der Standardabweichung der Änderung, auf der gesamten abgetasteten Kurve (19) oder einem Teil davon, der ersten oder zweiten Ableitung einer ersten Funktion wenigstens einer der drei Koordinaten (R, THETA, Z) der abgetasteten Kurve (19) nach einer zweiten Funktion wenigstens einer anderen der drei Koordinaten (R, THETA, Z) der abgetasteten Kurve (19) ist.

9. Verfahren nach einem der Ansprüche 2 bis 5, wobei der Schwellenwert (VS) wenigstens teilweise aus einem Wölbungsgrad der Brillenfassung (10) abgeleitet wird, der aus der Geometrie der abgetasteten Kurve (19) berechnet wird.

10. Verfahren nach einem der Ansprüche 2 bis 5, wobei die Suche nach den eventuellen Anomaliebereichen (S1, S2) nur im Schläfen-Teil des Randes (17) der Brillenfassung (10) durchgeführt wird.

11. Verfahren nach einem der vorhergehenden Ansprüche, wobei das Abtasten der Nut (11) durchgeführt wird, indem der Taster (8) gemäß ersten Querrichtungs- und/oder Längsrichtungs-Sollwerten von Positionen und/oder Kräften gesteuert wird, und die Korrektur der Geometrie jedes Anomaliebereichs (S1, S2) der abgetasteten Kurve (19) durchgeführt wird, indem jeder Anomaliebereich (S1, S2) der Kontur der Nut (11) erneut abgetastet wird, wobei der Taster (8) während dieser erneute Abtastung gemäß zweiten Querrichtungs- und/oder Längsrichtungs-Sollwerten von Positionen und/oder Kräften gesteuert wird, die von den ersten Sollwerten verschieden sind.

12. Verfahren nach einem der vorhergehenden Ansprüche, welches einen zusätzlichen Schritt der Überprüfung umfasst, ob die Brillenfassung (10) während des Abtastens der Nut (11) unbeweglich geblieben ist.

13. Verfahren nach einem der vorhergehenden Ansprüche, welches, falls die Brillenfassung (10) nicht unbeweglich geblieben ist, ein erneutes Abtasten der Gesamtheit der Kontur der Nut (11) umfasst, aus welchem die Geometrie der abgetasteten Kurve (19) abgeleitet wird.

**Claims**

1. A method of acquiring the shape of the outline of a bezel (11) of a rim (14) of an eyeglass frame (10), the method comprising sensing the bezel (11) by driving a feeler (8) to slide or roll along the longitudinal direction of the bezel (11), the feeler being urged transversely towards the bottom of the bezel (11), with the shape deduced for a sensed curve (19) approximating a longitudinal trace (12) of the bezel (11), and said shape of the sensed curve being corrected, **characterized in that** the correction of the sensed curve comprises :

- searching for one or more anomalous zones (S1, S2), if any, of the sensed curve (19) in which the feeler (8) deviated from the bottom of the bezel (11); and
- if one or more anomalous zones (S1, S2) are found, correcting the shape of each anomalous zone (S1, S2) of the sensed curve (19):

- by sensing each anomalous zone (S1, S2) of the outline of the bezel (11) again, the feeler (8) being controlled during this new sensing operation in application of second transverse and/or longitudinal position and/or force setpoints that depend on the anomalous zones (S1, S2) found, or
- by replacing the shape of each anomalous zone (S1, S2) of the sensed curve (19) with a shape that is reconstructed by calculation in application of continuity criteria involving differentiation of order greater than or equal to 1 relative to zones of the sensed curve (19) that are adjacent to said anomalous zone (S1, S2), or
- by sensing a plurality of points of the anomalous zone (S1, S2) of the bezel (11) and replacing the shape of the sensed curve (19) in each anomalous zone (S1, S2) with a shape that is reconstructed by interpolation based on said sensed points.

2. A method according to claim 1, wherein the search for said anomalous zones (S1, S2), if any, of the sensed curve (19) comprises searching for zones in which the first or the second derivative of a first function of at least one of the three coordinates (R, THETA, Z) of the sensed curve (19) relative to a second function of at least one other one of the three coordinates (R, THETA, Z) of the sensed curve (19) has an absolute value that exceeds a threshold value (VS), which threshold value is fixed or relates to the frame under consideration.

3. A method according to the preceding claim, wherein the search for any anomalous zones (S1, S2) of the sensed curve (19) comprises searching for any angular sectors (S1, S2) measured about an axis (B) lying inside the sensed curve (19) and extending generally transversely relative thereto, in which the first or second derivative of a radial and/or axial coordinate (R and/or Z) of the sensed curve (19) relative to another coordinate (TETA) of the sensed curve (19) that is an angular coordinate has an absolute value that is greater than said threshold value (VS).

4. A method according to claim 1, wherein the search for said anomalous zones (S1, S2), if any, of the sensed curve (19) comprises the following steps:

- subdividing the sensed curve (19) into a plurality of subdivision portions;
- calculating an interpolation curve portion between the ends of each subdivision portion of the sensed curve (19) ;
- searching amongst the subdivision portions of the sensed curve (19) for any abnormal subdivision portions that differ from the corresponding interpolation curve portion by more than a given threshold value; and
- determining said anomalous zones (S1, S2) as a function of any abnormal subdivision portions found.

5. A method according to the preceding claim, wherein the subdivision portions of the sensed curve (19) overlap in part.

6. A method according to any one of claims 2 to 5, wherein said threshold value (VS) is predetermined and is the same for a plurality of eyeglass frames (10).

7. A method according to claim 2 or claim 3, wherein said threshold value (VS) is calculated as a function of variations over all or part of the sensed curve (19) in the first or second derivative of a first function of at least one of the three coordinates (R, THETA, Z) of the sensed curve (19) relative to a second function of at least another one of the three coordinates (R, THETA, Z) of the sensed curve (19).

8. A method according to the preceding claim, wherein the threshold value (VS) is calculated as a function of the standard deviation of the variation over all or part of the sensed curve (19) in the first or second derivative of a first function of at least one of the three coordinates (R, THETA, Z) of the sensed curve (19) relative to a second function of at least another one of the three coordinates (R, THETA, Z) of the sensed curve (19) .

9. A method according to any one of claims 2 to 5, wherein said threshold value (VS) is deduced at least in part from a degree of camber of the eyeglass frame (10) calculated from the shape of the sensed curve (19).

10. A method according to any one of claims 2 to 5, wherein the search for any anomalous zones (S1, S2) is performed solely in the temporal portion of the rim (14) of the eyeglass frame (10).

11. A method according to one of the preceding claims, wherein the bezel (11) is sensed by controlling the feeler (8) in application of first transverse and/or longitudinal position and/or force setpoints, the shape of each anomalous zone (S1, S2) of the sensed curve (19) being corrected by sensing each anomalous zone (S1, S2) of the outline of the bezel (11) again, the feeler (8) being controlled during this new sensing operation in application of second transverse and/or longitudinal position and/or force setpoints that are different from said first setpoints.

12. A method according to one of the preceding claims, including an additional step of verifying that the eyeglass frame (10) has remained stationary while sensing the bezel (11).

13. A method according to the preceding claim, including, if the eyeglass frame (10) has not remained stationary, a new step of sensing the entire outline of the bezel (11) from which the shape of the sensed curve (19) is deduced.

Fig.1

Fig.2

# Fig.3

# Fig.4

# Fig.5

0     100     200     300     TETA (degrés)

# Fig.6

0     100     200     300     TETA

# Fig.7

**RÉFÉRENCES CITÉES DANS LA DESCRIPTION**

**Documents brevets cités dans la description**

- EP 0819967 A
- EP 0750172 A